(19) Europäisches Patentamt
European Patent Office
Office européen des brevets

(11) **EP 0 930 090 B1**

(12) **EUROPEAN PATENT SPECIFICATION**

(45) Date of publication and mention
of the grant of the patent:
**14.03.2007 Bulletin 2007/11**

(51) Int Cl.:
***B01D 53/34*** *(2006.01)*

(21) Application number: **99400074.3**

(22) Date of filing: **13.01.1999**

(54) **Peroxyacid compound use in odor reduction**

Verwendung einer Peroxidsäureverbindung zur Geruchsverminderung

Utilisation d'un composé peracidique pour la réduction des odeurs

(84) Designated Contracting States:
**BE DE DK FR GB IT NL**

(30) Priority: **14.01.1998 US 7225**
**10.07.1998 US 114017**
**10.07.1998 US 114013**

(43) Date of publication of application:
**21.07.1999 Bulletin 1999/29**

(73) Proprietor: **ECOLAB INC.**
**Saint Paul**
**Minnesota 55102 (US)**

(72) Inventors:
• **Lokkesmoe, Keith D.**
**Savage, Minnesota (US)**
• **Hei, Robert D.P.**
**Oakdale, Minnesota 55128 (US)**
• **Bennett, Scott P.**
**Stillwater, Minnesota 55082 (US)**
• **Wei, Guang-jong Jason**
**Mendota Heights, Minnesota 55120 (US)**
• **McLaren, Jay H.**
**Burnsville, Minnesota 55337 (US)**
• **Schilling, Joel J.**
**South St. Paul, Minnesota 55075 (US)**

(74) Representative: **Desaix, Anne et al**
**Ernest Gutmann - Yves Plasseraud S.A.S.**
**3, rue Auber**
**75009 Paris (FR)**

(56) References cited:
**EP-A- 0 596 493      GB-A- 930 584**
**GB-A- 1 370 678**

• **DATABASE WPI Week 7749 Derwent Publications Ltd., London, GB; AN 77-87204y XP002100428 & JP 52 127487 A (WAKI H.) , 26 October 1976**
• **PATENT ABSTRACTS OF JAPAN vol. 015, no. 445 (C-0884), 13 November 1991 & JP 03 190995 A (WATANABEGUMI:KK;OTHERS: 02), 20 August 1991**

**Description**

**Field of the Invention**

The invention relates to the use of peroxy acetic acid compositions in odor reduction. The invention relates to removing odor compounds from the atmosphere or from volumes of gas arising from the processing of organic materials. The processing can occur in large processing plants or in small loci such as kitchens or doctors offices. More specifically, the invention relates to an odor reduction process using liquid/atmospheric or liquid/liquid processing to treat gaseous or other effluent containing odor compounds. The odor can comprise organic and inorganic compounds including organic sulfur compounds, organic nitrogen compounds, organic oxo-compounds, ammonia, hydrogen sulfide, etc. and mixtures thereof.

**Background of the Invention**

Industrial plants, agricultural installations, hospitals, kitchens, etc. that handle large quantities of organic material such as hog farms, dairy farms, chicken farms; meat packing plants, animal rendering plants, composting plants, paper mills, sewage treatment plants and other similar installations can generate large quantities of odors that typically exit the facility in an odor contaminated atmospheric effluent flume or other effluents. Such an effluent can contain a large variety of odoriferous or odor causing inorganic and organic chemicals or molecules including organic sulfides or organic thiols (mercaptans), monoamines, diamines, triamines, ammonia, alcohols, formaldehyde, acetaldehyde, carboxylic acids, skatole, carbon disulfide and hydrogen sulfide and other odor forming oxidizable compounds. An atmospheric effluent having one or more of such compounds can have a strong odor and can be highly objectionable within the plant to plant personnel and outside the plant to plant neighbors.

An odor is a gas phase emission that produces an olfactory stimulus. The odor thresholds of many chemicals that act as odor compositions common throughout the chemical process industries include, for example, ethyl sulfide having an odor threshold in the atmosphere of 0.25 parts per billion (ppb), hydrogen sulfide with an odor threshold of 0.4 ppb, dimethyl sulfide with an odor threshold of 1.0 ppb, ethyl mercaptan with an odor threshold of 1.0 ppb, methyl mercaptan with an odor threshold of 1.1 ppb. With a low threshold a small amount of these and similar odors common in plant effluent are serious olfactory problems. Such odors result from processing large quantities of organic materials and are generated by the action of micro-organisms in any biologically active system on a source of organic material producing the odors. There are many other odor producing chemicals possible, however, as shown in this representative, non-inclusive list:

1. Sulfur compounds

| | |
|---|---|
| Hydrogen Sulfide | Thiophene |
| Carbonyl Sulfide | Isobutyl Mercaptan |
| Methyl Mercaptan | Diethyl Sulfide |
| Ethyl Mercaptan | n-Butyl Mercaptan |
| Dimethyl Sulfide | Dimethyl Disulfide |
| Carbon Disulfide | 3-Methylthiophene |
| Isopropyl Mercaptan | Tetrahydrothiophene |
| tert-Butyl Mercaptan | 2, 5-Dimethylthiophene |
| n-Propyl Mercaptan | 2-Ethylthiophene |
| Ethyl Methyl Sulfide | Diethyl Disulfide |

2. Organic nitrogen compounds

Primary amines
secondary amines
tertiary amines
pyridines

amides
ammonia

### 3. Organic oxygen compounds (oxo-hydrocarbon compounds)

primary alcohols
carboxylic acids
aldehydes
ketone compounds
phenolics

Attempts have been made to reduce the production of the odor compounds and to reduce the release of the odor compounds from plants. Robinson, "Develop a Nose for Odor Control", Chemical Engineering News, October 1993 contains a generic disclosure of odor problems and conventional odor control using aqueous treatment compositions including $H_2O_2$, $FeCl_3$, $KMnO_4$, NaOH and others. Careful control over the organic materials within the plant and reduction of microbial populations within the plant have been attempted to reduce the generation of the odor compounds in the plant atmosphere. Attempts to scrub the odor compounds from the plant atmosphere have been made using a variety of simple absorptive and oxidizing scrubbing materials. Fragrance chemicals that simply mask the offensive odors have been tried. Sodium hydroxide (NaOH), activated carbon are useful absorptives. Oxidizing materials such as ozone ($O_3$), chlorine dioxide ($ClO_2$), sodium hypochlorite (NaClO) and others have been attempted. Some degree of success has been achieved using these oxidative materials to remove organic odor molecules from atmospheric effluents. While chlorine dioxide has had some success, chlorine dioxide is highly toxic, difficult to handle and must be generated on site. Such difficulties lead to substantial resistance to its use. Further hydrogen peroxide is also known for odor control. Hydrogen peroxide by itself is not effective against a broad range of odor constituents without additional treatment materials. However, the application of oxidative technologies including ozone, hydrogen peroxide, chlorine dioxide and other oxidants have had some limited success.

The use of peroxyacid materials in microbiological methods are also known. For example, Grosse-Bowing et al., U.S. Patent Nos. 4,051,058 and 4,051,059 disclose peracetic containing antimicrobial compositions. Stas et al., U.S. Patent Nos. 4,443,342 and 4,595,577 disclose the treatment of waste water and waste gases containing dialkyldisulfides by metal catalytic oxidation of these compounds by means of a peroxide compound in an aqueous medium. Lokkesmoe, U.S. Patent No. 5,409,713 teaches peracetic materials as microorganism sanitizers or growth inhibitors in aqueous transport systems typically containing produce and large amounts of challenged soil load.

Fraser, in "Peroxygens in environmental protection", Effluent and Water Treatment Journal, June 1986 disclose that hydrogen peroxide ($H_2O_2$) can be used to reduce odor. Fraser only discusses microbial control with peracetic acid and does not correlate odor control to peracid treatment or concentration. Littlejohn et al., "Removal of $NO_x$ and $SO_2$ from Flue Gas by Peracid Solutions", Ind. Eng. Chem. Res. Vol. 29, No. 7, pp. 1420-1424 (1990) disclose peroxyacids in removing nitric oxides and sulfur dioxide from coal fire derived flue gas.

Peracetic acid, neat and in aqueous solutions containing peracetic acid has a strong pungent oxidizing odor resembling but stronger than acetic acid. Such materials have not been seriously considered as odor reducing materials because of the nature of its odor. The concern being that in any treatment process using a significant amount of peracetic acid, the resulting treated effluent would inherently obtain the pungent odor of the peracetic acid. Further, peracetic acid solution inherently contain large amounts of acetic acid (HOAc).

### Brief Discussion of the Invention

The invention involves a process for removing odor compounds from an atmospheric plant fluid effluent. In the process of the invention, the plant atmosphere or other effluent is contacted with an aqueous treatment solution containing a controlled amount of peroxyacid and $H_2O_2$. Sufficient peracid is used to control odor but not contribute a peracid or acid smell to the treated effluent. The process is typically conducted in a batch or continuous treatment mechanism such as a falling film contactor, a wet scrubber or venturi mechanism. A fluid effluent includes both a liquid and a gaseous effluent.

In the process of the invention the plant atmosphere or other effluent is contacted with an atomized, fogged or otherwise finely divided spray of the aqueous treatment solution containing a controlled amount of peroxyacid. The process is typically conducted outside the venturi restriction zone or tower packing chamber, and may be conducted alone or along with other peroxyacid treatments. In a preferred embodiment, however, the process of the invention is viewed as a pretreatment useful alongside other treatment processes.

Preferably, the finely divided aqueous peroxy acid treatment composition has an average droplet size of 25 to 500 μm.

In a preferred embodiment, the invention involves a pre-treatment or post-treatment process for removing an odor from an atmosphere effluent, the process comprising contacting an atmosphere effluent comprising an odor component with from about 0.1 to 3 gallons per minute (about 0.4 to 11 liters per minute) of a finely divided aqueous peroxy acid treatment composition comprising at least about 100 ppm of peroxyacetic acid, at least about 100 ppm of hydrogen peroxide and at least about 20 ppm of acetic acid, forming an oxidized odor component and dissolving the oxidized odor component or an odor component in the aqueous treatment composition; wherein the finely divided aqueous peroxy acid treatment composition has an average droplet size of 25 to 500 μm.

In another embodiment, the invention involves a process for removing odor compounds from an atmospheric plant fluid effluent In the process of the invention, the plant atmosphere or other effluent is contacted with an aqueous treatment solution containing a controlled amount of a peroxyacid and one or more fragrant essential oils. Sufficient peroxyacid is used to control odor but not contribute a peroxyacid or acid smell to the treated effluent. The process is typically conducted in a batch or continuous treatment mechanism such as a falling film contactor, a wet scrubber or venturi mechanism. A fluid effluent includes both a liquid and a gaseous effluent.

Surprisingly, the peroxyacid is not destroyed by the essential oils at a rate that interferes with oxidative odor reduction. In contrast, chlorine or chlorine dioxide as used in the prior art are incapable of surviving contact with essential oils as they rapidly lose their oxidizing capacity. Using a combination of peroxy acetic acid and an essential oil, surprisingly, allows the essential oil to behave as both a masking agent and an odor chemical reactant that augments the oxidative capacity of the peroxyacid; especially towards sulfur containing malodorous compounds.

Accordingly, the invention preferably can be found in a process for removing an odor from an atmosphere effluent, the process comprising contacting an atmosphere effluent comprising an odor component with the aqueous peroxy acetic acid treatment composition and one or more essential oils, forming an oxidized odor component and dissolving the oxidized odor component in the aqueous treatment composition to form a used treatment; and removing at least a portion of the used treatment.

## Brief Discussion of the Drawings

Figure 1a shows a block diagram of an odor reduction scheme as previously described, including a source of oxidant, a source of odor and effluent, a cocurrent scrubber apparatus or a counter current scrubber apparatus, the aqueous treatment and the resulting waste aqueous stream.

Figure 1b shows in greater detail a small portion of figure 1a, showing how the fogging pretreatment of the invention can be incorporated into the greater odor reduction scheme seen in figure 1a.

Figure 2a shows a venturi used as a means to contact the odor laden atmosphere or liquid effluent with the aqueous peroxy acetic acid composition.

Figure 2b shows in greater detail a small portion of figure 2a, showing how the fogging pretreatment of the invention can be incorporated into the greater odor reduction scheme seen in figure 2a.

Figure 3 is a graphical comparison of the oxidant survival rate in the invention treatment method of using peroxy acetic acid co-injected with essential oils versus previously used oxidative systems.

## Detailed Discussion of the Invention

In the treatment of gaseous effluent, when a gaseous atmospheric effluent gas phase contacts the finely divided aqueous treatment phase, oxidizable odor molecules from the gas phase react with the oxidizing peracetic acid material in the aqueous treatment, are chemically converted into freely soluble compounds and is scrubbed from the gas phase. Specifically, the gas molecules contact a liquid droplet, the odor causing compounds transfer from the gas phase into the liquid phase and are then reacted with the peracetic acid to form water soluble, low volatile compounds. Other soluble components of the gas phase simply are solubilized in the acidic aqueous phase. The resulting atmospheric effluent has a substantially reduced concentration of odor compound or composition and has a less objectionable odor level. For the purpose of this application, the term "active oxygen", active species" and "active ingredients" are substantially synonymous and refer to the total concentration of peroxide, peroxyacid or other available oxidizing species in a treatment that can oxidize the odor molecules or components. The term "atmosphere effluent" relates to any gaseous stream emanating from an industrial plant, agricultural facility, hospital, institutional kitchen, doctors office, household kitchen, etc. processing organic materials that result in the release of odor molecules into the atmosphere effluent. The atmosphere effluent can contain a large variety of odoriferous or odor causing chemicals or molecules including oxo-hydrocarbons, organo sulfides or organic thiols (mercaptans), monoamines, diamines, triamines, ammonia, alcohols, phenolics, formaldehyde, acetaldehyde, skatole, carbon disulfide and hydrogen sulfide and other odor forming oxidizable organic compounds. Such an atmosphere effluent typically is released in a flume that moves with the atmosphere and slowly mixes into the atmosphere, becomes diluted and dispersed into the environment. Further, not only does the peroxy acetic acid material result in the oxidation of odor components into freely soluble materials that remain in the aqueous phase, we have found that the use of such an acidic material results in the absorption of organic bases such as ammonia and amines resulting in the effective scrubbing of these compounds from the atmospheric effluent material. In large part the process is designed to favor the mass transfer of odor compounds into the aqueous treatment.

The process of the invention uses absorption, more specifically a gas/liquid absorption, a liquid/liquid absorption or solid particulate/liquid absorption, during and after an oxidative reaction to separate odor components from a fluid effluent. Both odor and particulate materials can be absorbed by the oxidizing liquid stream. In the process, absorption is driven by the solubility of the odor compounds, and oxidized odor materials, in the aqueous phase. At the same time, a chemical reaction between an aqueous stream and a gas stream results in washing or scrubbing oxidized odor compounds or compositions from the effluent with the liquid composition. As a result of the chemical reaction between the odor molecules in the stream and the treatment liquid, one or more of the oxidized constituents of the gas mixture will preferentially dissolve in the liquid and can thus be efficiently removed. In treatment of gaseous odor, the gas constituent reacts with the oxidant to form a highly water soluble material which forms a physical solution in the liquid and is removed from the gas stream.

Such a gas absorption is preferably carried out in a device where intimate contact between a gas phase and a finely divided liquid phase or a finely divided gas phase and a liquid phase is obtained. Such devices, including sparged and agitated vessels and the various types of tray towers, can contact a gas phase with a liquid and can disperse the gas phase into bubbles or foams. Tray towers are typically the most important of these since countercurrent multistage contact and other contacting can be obtained. The gas can be contacted in the form of a finely divided or small bubble into a bulk liquid in a sparged vessel (bubble column). Finely divided gas or atmospheric bubbles can be dispersed into a mechanically agitated vessel in which the liquid contents are agitated to ensure close contact with the finely divided bubbles and the liquid. Multistage absorption can be obtained using multistage tray towers using a variety of towers, baffles, barriers, downspouts and other mechanical means to ensure close contact between the gas phase and the liquid phase. Venturi scrubbers can be used along with wetted-wall towers, spray towers and spray chambers, packed towers, and any other countercurrent or cocurrent apparatus that can ensure close contact between the atmospheric or odor containing gas phase and the liquid treatment. The process can be run either continuous or in semibatch or batch mode. During the process, the accumulated treatment composition containing a substantial quantity of the odor compounds and the oxidized odor compounds are removed from the process equipment and directed to typically on-site treatment or municipal sewage treatment plants. In smaller applications, or liquid/liquid applications a venturi system is preferred while in larger applications, a countercurrent scrubber towers can be preferred.

In a countercurrent column, the oxidative treatment solution is fed in the top of the absorber and the effluent or gas mixture enters from the bottom. The odor components of the gas react with and dissolve in the liquid treatment composition. The aqueous treatment composition containing the oxidized odor generating substances is removed from the bottom of the column. Conversely, in a cocurrent column both streams enter the column at one end and depart at the opposite end. In either case, the resulting treatment solution containing the scrubbed materials is then treated in an industrial, agricultural or municipal waste water treatment facility.

The vertical absorber may be a packed column operating either countercurrently or cocurrently, plate column operating either countercurrently or cocurrently, a falling film contactor or a simple spray absorption column operating cocurrently. Preferred packed columns can be shell filled with packing material designed to disperse the liquid and bring the liquid in finely divided form in close contact with the rising effluent stream. Packed columns offer simple and cheap construction and are preferred for complex or corrosive gases because packed columns can be made from ceramics or other non reactive packings. In plate towers, liquid flows from plate to plate in a cascade fashion while the effluent gas bubbles through the flowing liquid within each plate through a multitude of dispersing means or through the cascade of liquid as in a shower deck tray. These absorbers are used where tall columns are required. The fundamental physical principles underlying the absorption of the odor molecules from the plant atmosphere effluent in a gas absorption reaction mode relate to the solubility of the reaction product between the peracetic acid oxidant liquid phase and the gas molecules. The rate of mass transfer is high (odor removal is efficient) because the reaction product, between the odor molecules and the peracetic acid oxidant, comprises molecules such as sulfate, alcohol, aldehyde, carboxylic acid and salts, ammonium ion ($NH_4^+$), protonated amines and other similar species which are highly soluble in water solutions particularly at acid pH. Since these oxidized and other non-oxidized materials are highly soluble in the aqueous treatment solutions, mass transfer principles tend to favor the dissolution of such materials in the aqueous treatment composition and result in highly efficient odor molecule scrubbing. The process of the invention can be carried out in commonly available scrubber systems. Such systems can be obtained from a variety of manufacturers including EST Corp., D.R. Technology, Inc., PEPCO and VIATEC. In smaller applications, a venturi contactor may be preferred.

The invention is also concerned with a process whereby a finely divided or fogged peroxy acetic acid composition is used to augment an odor reduction process. It has been found that a fogged peroxy acetic acid composition is highly effective at odor reduction. Preferred average droplet size ranges from 25 to 500 $\mu$m ($10^{-6}$m) in diameter, with a more preferred size range of 30 to 100 $\mu$m and a most preferred range of 30 to 60 $\mu$m. By contrast, conventional treatments utilize spray droplets which range from 1000 to 100,000 $\mu$m. Without being limited by theory, it is believed that the augmented effectiveness is due to the vastly greater droplet surface area, which results in a greatly expanded level of contact surface between the peroxy acid droplets and the odor causing compounds. This makes it possible to greatly reduce the volume of aqueous peroxy acid solution used. While treatments utilizing larger droplets use an aqueous flow rate of about 9 to 100 gallons per minute (35 to 380 liters per minute), the use of smaller droplets permit effective odor control at use flow rates of about 0.1 to 3 gallons per minute (0.4 to 11 liters per minute).

There are a number of different ways to form the droplets of the desired size. Most atomizers can be categorized into one of three common categories: pressure nozzles, two-fluid nozzles and rotary devices. These devices are available commercially from Spraying Systems Company. The degree of atomization is determined by the fluid and or gas pressure along with the spray head bore size and design. The specified droplet size can be determined from commercial correlation charts which are available from suppliers. Preferably, an air injected atomizing nozzle is used. This type produces a much smaller droplet size in the range of 20 to 40 $\mu$m.

The process described above is preferably used as a pretreatment, alongside additional peroxy acid composition treatments. These additional treatments are preferably carried out in a device where intimate contact between a gas phase and a finely divided liquid phase or a finely divided gas phase and a liquid phase is obtained. Such devices, including sparged and agitated vessels and the various types of tray towers, can contact a gas phase with a liquid and can disperse the gas phase into bubbles or foams. Tray towers are typically the most important of these since countercurrent multistage contact and other contacting can be obtained. The gas can be contacted in the form of a finely divided or small bubble into a bulk liquid in a sparged vessel (bubble column). Finely divided gas or atmospheric bubbles can be dispersed into a mechanically agitated vessel in which the liquid contents are agitated to ensure close contact with the finely divided bubbles and the liquid. Multistage absorption can be obtained using multistage tray towers using a variety of towers, baffles, barriers, downspouts and other mechanical means to ensure close contact between the gas phase and the liquid phase. Venturi scrubbers can be used along with wetted-wall towers, spray towers and spray chambers, packed towers, and any other countercurrent or cocurrent apparatus that can ensure close contact between the atmospheric or odor containing gas phase and the liquid treatment. The process can be run either continuous or in semibatch or batch mode. During the process, the accumulated treatment composition containing a substantial quantity of the odor compounds and the oxidized odor compounds are removed from the process equipment and directed to typically on-site treatment or municipal sewage treatment plants. In smaller applications, or liquid/liquid applications a venturi system is preferred while in larger applications, a countercurrent scrubber towers can be preferred.

The aqueous treatment compositions can be introduced into the wet scrubber in the form of a simple aqueous stream, an agitated stream, or a spray having an effective concentration of a peroxyacid treatment composition. The treatment compositions of the invention comprise peracetic acid having the formula $CH_3CO_3H$. The peracetic acid is an unstable composition that is typically made by the direct acid catalyzed equilibrium oxidation reaction between 5 to 98 wt % hydrogen peroxide in contact with acetic acid or by auto-oxidation of acetaldehyde, acetyl chloride or acetic anhydride with hydrogen peroxide or other peroxy oxidizing compositions.

In treating liquid effluents, a batch or continuous treatment can be used. In batchwise treatment the effluent can be treated in large stirred tanks. In continuous treatment, the effluent can be treated by a continuous stream of peracid that can be added in a pumped or metered treatment. One common metering scheme is to add the treatment using a venturi. In a venturi the passage of the effluent past a venturi causes the treatment to be drawn into the effluent. The ratio of addition can be controlled by a selected venturi or metering means.

The process of the invention uses a combination of peracetic acid, hydrogen peroxide and acetic acid. The compositions of the invention contain water, peracetic acid, hydrogen peroxide and acetic acid across a relatively broad range of concentrations. Peracetic acid is a freely water soluble liquid having a pungent, acrid odor resembling acetic acid, but with a strong oxidizing character. The compositions useful in the process of the invention also comprise a proportion of hydrogen peroxide. Hydrogen peroxide in combination with peracetic acid provides a surprising level of successful odor scrubbing capacity when compared to conventional scrubbers. Hydrogen peroxide apparently provides an effervescent action in the treatment composition that tends to help in providing finely divided aqueous treatment particles that improve oxidation by the peroxyacid and absorption through small particles with large surface area. The concentration of hydrogen peroxide is adjusted with respect to the concentration of acetic acid and water to ensure that the treatment composition contains preferably greater than about 1 ppm, preferably about 1 to 1000 ppm of residual or active peracetic acid in the treatment composition for highly efficient odor molecule scrubbing. The concentration of the active ingredients in the treatment composition can be adjusted using make-up amounts of the concentrate material delivered to the continuously flowing aqueous stream during processing.

The compositions useful in the process of the invention may also comprise any number of functional and non-functional adjuvants. Specifically, these compositions may comprise stabilizing agents, wetting agents, as well as pigments or dyes among other constituents. Stabilizing agents may be added to the composition of the invention to stabilize the peroxyacid and hydrogen peroxide to prevent the premature decomposition of the oxidizing material within the composition of the invention. Chelating agents or sequestrants are generally useful in the compositions of the invention in the form of alkyl diamine polyacetic acid-type chelating agents such as EDTA, acrylic and polyacrylic acid-type agents, phosphonic acid, and phosphonate-type chelating agents among others. Preferred sequestrants include phosphonic acid and phosphonic acid salts including 1-hydroxyethylidene-1,1-diphosphonic acid, amino[tri(methylenephosphonic acid)] and other phosphonate based sequestering agents. Also useful in the compositions of the invention are surfactant, wetting or defoaming agents. Wetting agents function to increase the surface area and reduce particle size of the particulate aqueous treatment composition. Such wetting agents are known within the art to raise the surface activity of the composition of the invention. Preferred wetting agents are low foaming nonionic surfactants which may be used comprising ethylene oxide moieties, propylene oxide moieties as well as a mixture thereof and EO-PO heteric or block compositions. Defoaming agents comprising silica, silicones, aliphatic acids or esters, alcohols, sulfates, sulfonates, amines, amides, nonionic materials and others can be helpful in defoaming the mixture during processing. The treatment compositions may contain a number of other constituents selected by the operator to enhance the properties of the materials.

The treatment compositions can comprise concentrate materials that fall within the following generic formula:

**Treatment Concentrate**

| Ingredient | Useful Wt% | Working Wt% | Preferred W% |
|---|---|---|---|
| Peracetic Acid | 1-40 | 2-30 | 4-20 |
| Hydrogen Peroxide | 1-50 | 3-40 | 5-30 |
| Acetic Acid | 1-90 | 3-60 | 5-40 |
| Sequestrant | 0.1-10 | 0.1-5 | 0.5-2 |
| Water | Balance | Balance | Balance |

The above compositions comprise concentrate materials that can be metered into an aqueous stream directed to the scrubber apparatus. Such a concentrate can be metered into an aqueous stream in an amount forming a residual concentration containing about 1 to 500 ppm peracetic acid, 1 to 3,000 ppm hydrogen peroxide, 1 to 600 ppm of acetic acid and other active components, preferably about 1 to 50 ppm peracetic acid, 1 to 500 ppm hydrogen peroxide, 1 to 300 ppm of acetic acid and other active components. As a general guideline, the following table sets forth working ranges of active ingredients in the treatment composition after dilution in the aqueous stream within the wet scrubber. Significantly larger concentrations can add an objectionable odor of the treatment materials into the air stream.

**Residual or Active Concentrations in the Treatment**

| Treatment Constituent | Useful (ppm) | Working (ppm) | Preferred (ppm) |
|---|---|---|---|
| Peracetic Acid | 1-500 | 1-100 | 1-50 |
| Hydrogen Peroxide | 1-3,000 | 1-1,000 | 1-500 |
| Acetic Acid | 1-600 | 1-400 | 1-300 |
| Sequestrant | 0.01-50 | 0.01-25 | 0.01-10 |
| Water | Balance | Balance | Balance |

These concentrations are determined using the following formulas:

$$\text{Dosed Concentration} = \frac{\text{grams of active ingredient added}}{\text{grams of liquid solution}}$$

$$\text{Residual Concentration} = \frac{\text{grams of active ingredient detected by analysis after reaction}}{\text{grams of liquid solution}}$$

These compositions comprise concentrate materials that can also be atomized into a scrubber apparatus. Since the odor is being treated with a low-flow, high surface area fog, the peroxy acid concentration of the treatment is typically higher than traditional water treatments using low surface area misting solutions. Such a concentrate can form a dosed concentration containing about 1 to 30,000 ppm peroxy acid, 1 to 30,000 ppm hydrogen peroxide, 1 to 5000 ppm of carboxylic acid and other active components, preferably about 100 to 5000 ppm peroxyacetic acid, 100 to 5000 ppm hydrogen peroxide, 20 to 300 ppm of acetic acid and other active components. As a general guideline, the following table sets forth working ranges of active ingredients in the fog treatment composition.

**Dosed Concentrations**

| Treatment Constituent | Useful (ppm) | Working (ppm) | Preferred (ppm) |
|---|---|---|---|
| Peroxyacid | 1-30,000 | 50-10,000 | 100-5,000 |
| Hydrogen Peroxide | 1-30,000 | 50-10,000 | 100-5,000 |
| Carboxylic Acid | 1-5,000 | 10-500 | 20-300 |
| Sequestrant | 0.01-50 | 0.01-25 | 0.01-10 |
| Water | Balance | Balance | Balance |

Another way to view composition ranges is to use ratios between various critical components. The first important ratio is that between the peroxy acid and the carboxylic acid. The aqueous peroxy acid fog treatment composition preferably comprises less than 4 parts by weight, more preferably less than 2.5 parts by weight, of peroxy acid per each part of carboxylic acid.

The second important ratio is that between hydrogen peroxide and the peroxy acid. The aqueous peroxy acid fog treatment composition comprises less than 5 parts by weight of hydrogen peroxide per each part of peroxy acid, preferably less than 2 parts by weight of hydrogen peroxide per each part of peroxy acid.

Because active oxygen can come from more than one source, it is also important to consider the total active oxygen content. The aqueous peroxy acid fog treatment composition comprises a dosed peroxy acid and hydrogen peroxide concentration resulting in an active oxygen concentration of less than about 20,000 parts by weight of active oxygen per one million parts of the treatment, preferably less than about 5,000 parts by weight of active oxygen per one million parts of the treatment and more preferably less than about 2,000 parts by weight of active oxygen per one million parts of the treatment.

A particularly aqueous peroxy acid fog treatment composition comprises 1 to 90 weight percent (wt %) of acetic acid, 1 to 50 wt % of hydrogen peroxide, a sequestrant, and 1 to 40 wt % of peroxyacetic acid.

Traditionally, in removing odor compositions from an effluent stream, a continuous stream of the treatment composition is directed to the top of ascrubber column. The treatment composition flows counter-currently through the column to scrub odor compositions from the effluent gas. It is possible, however, to accomplish this using co-current flow if using a packed column or spray chamber. The spray chamber would utilize a high-flow (4 to 380 liters per minute), low-surface area spray mist (1000-100,000 μm diameter droplets) to effect sufficient mass transfer of the odor compounds to the aqueous phase. The dosed peroxy acid concentration would typically be about 30 to 200 ppm in the spray. To maintain an effective concentration of the peroxyacetic acid in the treatment composition, a make up amount of the concentrate must be either continually or intermittently added to the continuous stream to maintain at least about 1 ppm of residual peroxyacetic acid, preferably at least about 2 and preferably at least 25 ppm of residual peroxyacetic acid during operations. In the current invention, a high surface area, concentrated peroxy acid fog (dosed peroxy acid is about 100 to 50,000 ppm (parts by weight of active peroxy acid per one million parts of solution), with a droplet size which ranges from 25 to 500 μm) is atomized in a pre-chamber or duct either before or after a conventional spray system. The atomized fog flow rate is only about one-tenth to one-fiftieth that found in conventional spray treatments. In this situation, the flow rate of the atomized fog is such that 28 liters of atmospheric effluent is contacted with about 0.01 to 0.18 liters of aqueous treatment solution. Thus, even though a high concentration of peroxy acid is utilized, the low flow rate allows for an enhanced economic treatment process over a conventional malodor reduction process.

The compositions may also contain one or more essential oils, which are generally defined as distillable odoriferous products of plant origin. While the principle components are mono- to tetra-unsaturated olefin terpenes, essential oils may also contain benzenoid and aliphatic compounds as well. Terpenes are unsaturated hydrocarbons which are based on the isoprene unit of alternating double bonds. Terpenes of use in the invention include citral, camphor, α and β-pinene= terpineol, limonene, α and β-terpinene, α and β-phellandrene, cedrene, geraniol, linalool, neral and abietic acid. Especially preferred terpenes include citral, camphor, α and β-pinene= terpineol and limonene. Preferred essential oils can also include such aldehydes as benzaldehyde and cinnamaldehyde.

The treatment compositions can comprise concentrate materials that fall within the following generic formula:

### Treatment Concentrate 1

| Ingredient | Useful Wt% | Working Wt% | Preferred W% |
| --- | --- | --- | --- |
| Peroxyacid | 1-40 | 2-30 | 4-20 |
| Hydrogen Peroxide | 1-50 | 3-40 | 5-30 |
| Carboxylic Acid | 1-90 | 3-60 | 5-40 |
| Sequestrant | 0.1-10 | 0.1-5 | 0.5-2 |
| Water | Balance | Balance | Balance |

### Treatment Concentrate 2

| Ingredient | Useful Wt% | Working Wt% | Preferred W% |
| --- | --- | --- | --- |
| Essential Oil | 10-100 | 50-100 | 80-95 |
| Mineral Spirits | 0-80 | 0-20 | 0-15 |
| Surfactants | 0-20 | 0-10 | 0-5 |

The above compositions, co-injected with essential oils, comprise concentrate materials that can be metered into an aqueous stream directed to the scrubber apparatus. An oxidative concentrate such as treatment concentrate 1 can be metered into an aqueous stream along with separately added essential oils (such as treatment concentrate 2) in an amount forming a residual concentration containing about 1 to 1000 ppm peroxyacid, 1 to 2,000 ppm hydrogen peroxide, 1 to 600 ppm of carboxylic acid (e.g. acetic acid) and other active components, about 1 to 10,000 ppm of essential oil, preferably about 30 to 150 ppm peroxyacid, 1 to 500 ppm hydrogen peroxide, 1 to 300 ppm of carboxylic acid and other active components and 10 to 500 ppm of essential oil. As a general guideline, the following table sets forth working ranges of active ingredients in the treatment composition after dilution in the aqueous stream within the wet scrubber.

### Residual or Active Concentrations

| Treatment Constituent | Useful (ppm) | Working (ppm) | Preferred (ppm) |
| --- | --- | --- | --- |
| Peroxyacid | 1-1,000 | 5-300 | 30-150 |
| Hydrogen Peroxide | 1-2,000 | 1-1,000 | 1-500 |
| Carboxylic Acid | 1-600 | 1-400 | 1-300 |
| Sequestrant | 0.01-50 | 0.01-25 | 0.01-10 |
| Essential Oil | 1-10,000 | 5-1,000 | 10-500 |
| Water | Balance | Balance | Balance |

During operations, in removing odor compositions from an effluent stream, a continuous stream of the treatment composition is directed to the top of a scrubber column. The treatment composition flows counter-currently through the column to scrub odor compositions from the effluent gas. It is possible, however, to accomplish this using co-current flow if using a packed column or spray chamber. To maintain an effective concentration of the peracetic acid in the treatment composition, a make up amount of the concentrate must be either continually or intermittently added to the continuous stream to maintain at least about 1 ppm of residual peracetic acid, preferably at least about 2 and preferably at least 25 ppm of residual peracetic acid during operations.

Exemplary peracetic acid formulas (equilibrium mixtures).

| Ingredient | Wt% |
|---|---|
| Acetic Acid | 32.0 |
| Hydrogen Peroxide | 11.1 |
| Sequestrant | 1.5 |
| Water | 41.0 |
| Peracetic Acid | 15.0 |

| Ingredient | Wt% |
|---|---|
| Acetic Acid | 6.5 |
| Hydrogen Peroxide | 26.6 |
| Sequestrant | 1.0 |
| Peracetic Acid | 4.7 |
| Water | 61.6 |

| Ingredient | Wt% |
|---|---|
| Acetic Acid | 30.0 |
| Hydrogen Peroxide | 7.0 |
| Sequestrant | 1.0 |
| Peroxyacetic Acid | 5.0 |
| Peroctanoic Acid | 0.5 |
| Hydrotrope (coupling agent) | 5.0 |
| Octanoic Acid | 3.0 |
| Water | balance |

| Ingredient | Wt% |
|---|---|
| Acetic Acid | 46.0 |
| Hydrogen Peroxide | 4.0 |
| Sequestrant | 1.0 |
| POAA (Peroxyacetic acid) | 12.0 |
| POOA (Peroxyoctanoic acid) | 2.0 |
| Octanoic Acid | 8.2 |
| Water | 26.5 |

During operations to maintain the concentrations of the peracetic acid mentioned above, the exemplary peracetic acid formulations are typically added as make-up to the treatment streams at rates of about 100 to 2000 ppm of the peracetic acid formulations in the aqueous stream typically flowing as make-up water at the rate of about 1 to 10,000 L-min$^{-1}$. The use of make-up solution directed to the continuously flowing treatment stream is a preferred means to introduce the peracetic acid material into the scrubber or venturi apparatus.

Process Parameters

In the odor reduction treatment process of the invention, an aqueous solution is passed in a continuous stream through the scrubber apparatus. In typical applications, the aqueous treatment composition passes through the scrubber at a rate of about 1 to 10,000 L-min$^{-1}$, depending upon the size of the scrubber. Typically, the scrubber is a vertical wet scrubber having interior packing. The aqueous solution passes through the column packing in a finely divided form comprising streams, droplets, etc. through the column packing. The rate of solution flow is adjusted depending upon the size of the scrubber, the volumetric flow rate of gas, and the soil level of the gas.

The aqueous treatment material is added to the continuously flowing aqueous stream in make-up water. The aqueous peracetic acid is typically added in a concentrate at a dosed concentration of about 10 to 1000 ppm, preferably about 10 to 300 ppm of peracetic acid to make-up water added to the aqueous stream at a rate of about 1 to 500 liters per hour. The effective residual concentration of peracetic acid in the aqueous stream is maintained between 1 and 500 ppm peracetic acid, preferably about 1 to 100 ppm peracetic acid, most preferably about 1 to 50 ppm peracetic acid. The effective concentration of essential oils, if used, is maintained at a concentration of 1 to 10,000 ppm, preferably 10 to 500 ppm.

The atmospheric effluent from the plant atmosphere is passed through the scrubber at a rate of about 100 to 3 million liters of atmosphere effluent per minute (atmos. L-min$^{-1}$). Preferably, the aqueous treatment material has a flow rate such that 28 liters of atmospheric effluent is contacted with about 0.01 to 10 liters of aqueous treatment solution. The temperature of the scrubber is maintained at ambient temperatures, however, somewhat elevated temperatures can enhance the oxidation and dissolution of the gas in the liquid stream. The wet scrubber can be operated continually at such ratios to efficiently remove odor compounds from the atmospheric stream. The odor compounds and oxidized odor compounds remain solubilized in the aqueous phase. After the odor reduction process is used for some period, the odor compounds are removed with a portion of the aqueous stream that can be removed from the scrubber continually. Such a proportion of the aqueous stream can comprise about 1 to 500 liters of the aqueous stream per hour (L-hr$^{-1}$). Alternatively, the aqueous stream can be removed batchwise or in its entirety periodically, e.g. every 4, 6, 12 or 24 hours, bi-weekly, weekly, etc. The process can then be restarted with fresh water and fresh treatment chemicals. The aqueous product of the treatment process is a relatively dilute solution of the treatment chemicals, sulfates, ammonia, alcohols, aldehydes and other common waste water components. The aqueous effluent resulting from the process is compatible with most industrial and municipal waste treatment facilities which can treat the aqueous effluent rendering it innocuous to the environment.

## Detailed Discussion of the Drawings

Figure la demonstrates a typical peroxy acid treatment as described in copending application 09/007,225, now U.S. Patent No. 6,015,576, issued January 28, 2000, including a source of oxidant, a source of odor and effluent, the scrubber apparatus, the aqueous treatment and the resulting waste aqueous stream. A detailed description is as follows:

The source of the odor 1, which can be a large processing plant or as small as a kitchen, is typically an industrial plant or agricultural installation that handles large quantities of organic material, such as meat packing plants, animal rendering plants, composting plants, paper mills, sewage treatment plants, hog farms, dairy farms and other similar installations generate large quantities of odors that typically exit the plant in an odor contaminated atmospheric effluent flume. The air from this source is fed as stream la into an air fan or pump 2, which then blows air into the scrubber tower 8 as stream 2a. A holding tank 3 is used as the source of peroxyacetic acid, acetic acid and hydrogen peroxide. This may actually be a series of holding tanks, as needed. These chemicals flow as stream 3a to the dosing pump 4, which is used to add chemicals to the aqueous stream 4a as needed. A source of clean water 5 is used as needed to add or make up water to the water in the aqueous stream via pipeline 5a, which flows to mixing valve 5'. From this valve, the correctly mixed aqueous stream 5b, is directed to the holding tank 6. Tank 6 can be incorporated into the bottom of tower 8 if convenient. From this tank 6, the aqueous stream 6a flows to a water pump 7 which provides the necessary pressure to force the aqueous stream 7a through the scrubber tower 8 at the desired rate.

The scrubber tower 8 is used to provide the necessary contacting area between the peroxyacid containing aqueous stream 7a and the odor-causing compounds within the gaseous phase 2a. The tower operates countercurrently, meaning that the aqueous stream 7a enters at the top and exits the bottom while the air stream 2a enters the bottom and exits at the top. The air stream 8b exiting the top of the tower flows to an optional stack 10. The aqueous stream 8a exiting the bottom of the tower flows to diverter valve 8", which recycles a portion of the aqueous flow back to the holding tank 6 while diverting the remainder as waste stream 9. Alternatively, the contacting column 8' can also operate cocurrently.

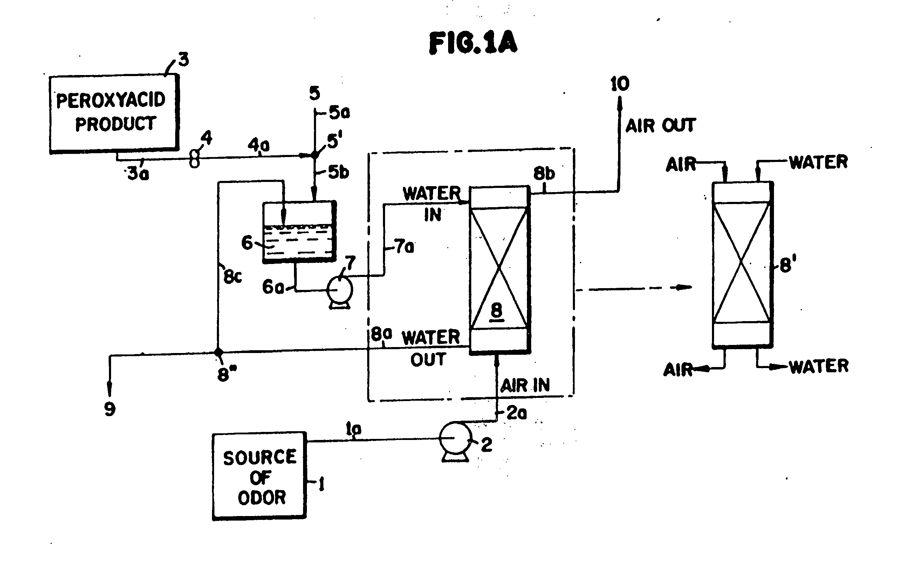

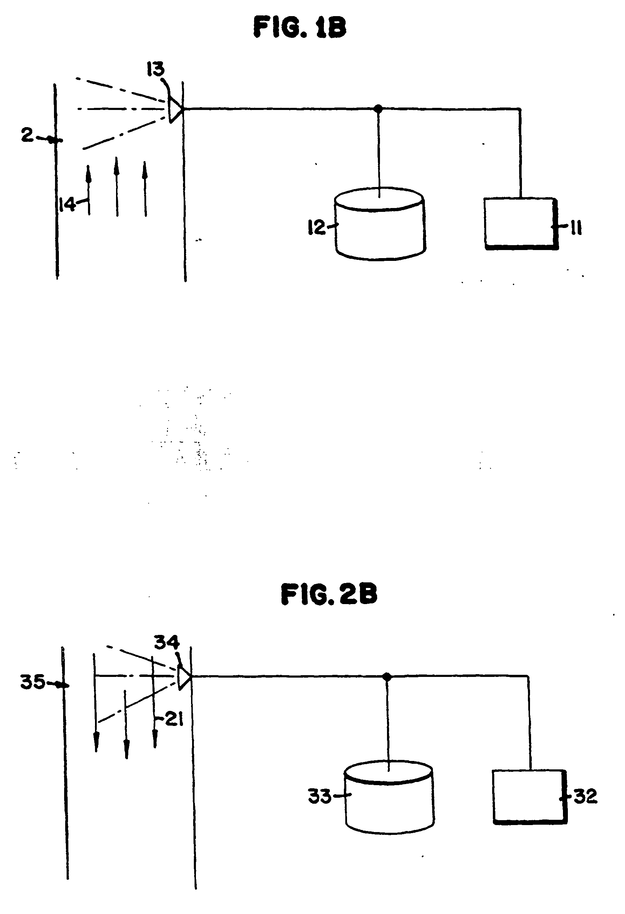

Figure 1b shows the peroxy acid pretreatment process of the invention. Odor laden airflow 14 is seen passing through air inlet 2. Compressor 11 is used along with atomizer 13 to provide a fogged peroxy acid pretreatment into the airflow 14. Also seen is a peroxy acid pretreatment solution source 12.

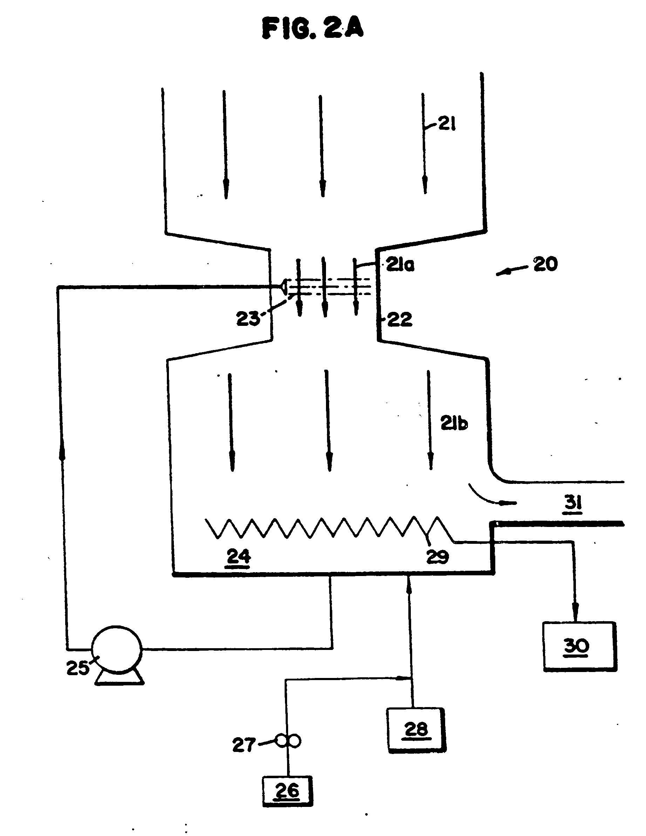

Figure 2a shows generally a venturi system 20 that can be used to contact odor laden air with the peroxy acid treatment. This installation can be used in smaller locations such as hog barns, effluent lagoons, etc. In Fig.2, odor laden fluid, air or liquid, 21 enters the venturi 20 through air inlet 35. The fluid 21 enters the restricted area 22, in the venturi 20, that produces an area of increased speed and reduced pressure. In the restricted area 22 the odor laden fluid 21 a is contacted with the spray 23 from a source of peroxy acid treatment 24. The treated fluid 21b with reduced odor exits the venturi 20 at vent or air exit 31. The treatment solution 24 is directed to the venturi 20 restricted area 22 using pump 25. Make-up water results from water source 28. Make up peroxy acid (peroxyacetic acid) is provided by source 26 and metering pump 27. Over flow or excess treatment solution is drawn off by overflow means 29 to a sewage treatment zone 30. The fluid 21 can be forced into the venturi 20 or can be drawn from the venturi 20 from the vent 31.

Figure 2b shows a portion of figure 2a, demonstrating how the peroxy acid pretreatment of the invention can be incorporated into the greater odor reduction scheme outlined in figure 2a. Specifically, the odor laden inflow 21 is seen passing through the air inlet 35. A compressor 32 and a peroxy acid solution source 33 are used to provide an atomized pretreatment spray via atomizer 34. The pretreated air then passes along to receive additional treatment as seen in figure 2a.

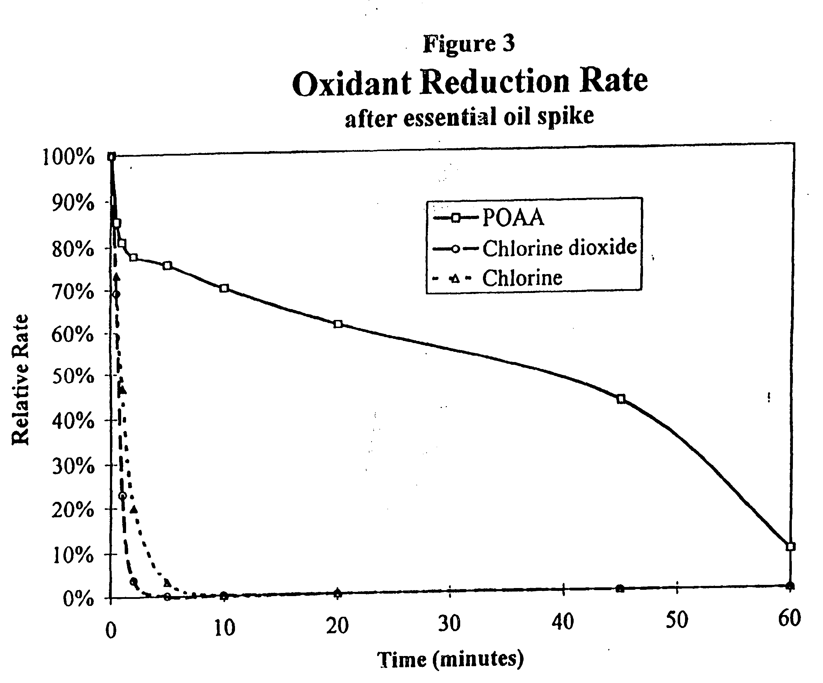

Figure 3 is a graphical comparison of the oxidant survival rate in the invention treatment method of using peroxyacids co-injected with essential oils versus previously used oxidative systems. As seen in the figure, upon spiking an essential oil (pine oil) into a conventional treatment system such as chlorine or chlorine dioxide, the loss of oxidant is rapid; with essentially complete elimination within about five to ten minutes. This rapid oxidant loss would negate the use of simultaneous essential oil addition. In contrast, the peroxyacid rate of decay is much lower with a small residual remaining even after one hour. This demonstrates the unexpected synergistic effect resulting from the combination of the peroxyacids with the essential oils.

### Working Examples

The following examples are intended to illustrate but not limit the invention.

### Example 1

Exhaust air from a blood drying operation in a rendering plant is directed first into a venturi and then into a packed column scrubber at an air flow rate of 15,000 cubic feet per minute (cfm), or 425 cubic meters per minute. Water which was treated with a 4.5% POAA (peracetic acid), 27% $H_2O_2$ solution is pumped into the venturi and through the tower countercurrently to the air flow. Plastic contacting rings are used in the tower to maximize the surface area of contact between the aqueous and gaseous phases. The recirculation rate of liquid through the column is approximately 200 gallons per minute (gpm), or 760 liters per minute. The makeup water feed rate into the venturi and the scrubber is 10 gpm (38 liters per minute). Approximately 1100 ppm (vol/vol) of the 4.5% peracetic acid solution (POAA) is fed into the makeup water to the venturi and the tower. The specific gravity of the POAA product is 1.12 gm/cm$^3$. Therefore, the dosed active peracetic acid concentration is (1.12)(1150)(0.045) = 58 ppm wt/wt peracetic acid. The residual POAA concentration by thiosulfate/KI/starch titration ranges from 15-20 ppm. Results of this treatment increased the rate of odor removal from the scrubber as compared to using two previous products per the following table:

| Test | Treatment | Air Treatment Score | Cleanliness of inside of scrubber packing |
|---|---|---|---|
| 1 | Chlorine gas combined with sodium hydroxide | 1.0 | 1.0 |
| 2 | Organic acid and octylphenol ethoxylate (surfactant) and sulfosuccinate (surfactant) | 1.0 | 1.0 |
| 3 | Peracetic acid solution | 3.5 | 4.0 |

As shown the prior art treatments (tests 1 and 2) yielded relatively low scores from the odor and cleaning panel. The use of the compositions and methods of the invention (test 3) gives surprisingly improved odor and cleanliness evaluations. The treatment with peracetic acid (POAA) gave the best odor removal and also kept the scrubber interior the cleanest of all three treatments. The Air treatment score is based on the rating of the treatment's effectiveness on a scale of 1-5. A score of 1 means that virtually no difference in olfactory response occurred (i.e., no odor reduction). A score of 5 indicates complete removal of the odor from the air stream. The Cleanliness indicates the amount of slime and deposits on surfaces of the scrubber and packing. A score of 1 indicates visible, thick deposits after running the scrubber for several days. A score of 5 indicates complete removal of deposit and slime layers from the interior surfaces and maintenance of a deposit-free surface over time.

### Example 2

The water used in the venturi and packed tower system described in Example 1 was treated with various of ratios of peroxyacetic acid (POAA) and hydrogen peroxide ($H_2O_2$). The active ingredients in the concentrated products used for this testing were as follows:

| Formula | %POAA | % $H_2O_2$ | % Acetic Acid (AA) | SG |
|---|---|---|---|---|
| 1* | 4.5 | 27 | 6.5 | 1.12 |
| 2 | 15.0 | 11.0 | 31.4 | 1.11 |
| 3* | 0.0 | 35.0 | 0.0 | 1.13 |
| 4 | 4.7 | 6.9 | 24.0 | 1.08 |
| * Comparison | | | | |

All formulas contained 1.5% DEQUEST®2010 (1-hydroxyethylidene-1,1-diphosphonic acid, HEDP), with the balance being water.

In this system, the venturi and tower were used in series, with the gases first contacting the venturi, and then passing through the packed tower before being ejected from the plant stack to the atmosphere. The odorous gases being treated were exhaust gases from a blood dryer.

The effect of each type of treatment on Odor Intensity was studied by taking 10 liter samples in Tedlar bags of the exhaust gas just prior to the venturi (inlet) and immediately after the tower scrubber (outlet). The inlet and outlet samples were taken simultaneously in order provide the best representation of odor changes in the scrubber system. These bags were then submitted to a trained odor panel on the same day as sampling and tested for Odor Intensity (Int), which is defined as the offensive intensity of the odor as compared to standard solutions of n-butanol, and is reported as ppm n-butanol equivalent. The Odor Intensity tests were run according to ASTM Standard Practice E544-75/88. Duplicate samples were taken for all tests.

Reductions in the Odor Intensity indicate removal of odorous compounds from the air stream. If the percentage (%) reduction is negative, then the intensity of the odor actually increases due to the treatment in the scrubber. If the percentage (%) is positive, then the intensity of the odor actually is reduced due to the treatment in the scrubber. The following table gives results of Intensity tests for various formulas of POAA and $H_2O_2$ described in the above table diluted to various dosed concentrations (ppm) of active ingredients, as shown below. The treatments of the invention reduce the odor intensity by at least about 5 %, preferably by 35 %, most preferably by 50 %.

| Percent Reductions in Odor Intensity | | | | | |
|---|---|---|---|---|---|
| Formula | POAA | AO | AA | $H_2O_2$ | % Reduction Intensity |
| 1* | 80 | 240 | 116 | 480 | -33 |
| 2 | 267 | 147 | 560 | 195 | 9 |
| 2 | 80 | 45 | 168 | 59 | 47 |
| 3 * | 0 | 240 | 0 | 512 | -120 |
| 4 | 80 | 74 | 415 | 117 | 58 |
| 1 * | 40 | 120 | 58 | 240 | -81 |
| * Comparison | | | | | |

All concentrations are in dosed ppm active species. AA represents the concentration of acetic acid. AO (Active Oxygen) represents the total oxidizing potential of the product and is calculated by multiplying the active oxygen contributed by POAA (21% AO) by the level of POAA in the system, and then adding this to the active oxygen contributed by $H_2O_2$ (47% AO) times the level of $H_2O_2$ in the system. For example 80 ppm POAA times 0.21 plus 480 ppm $H_2O_2$ times 0.47 equals 240 ppm total active oxygen (AO) in the first row of the table. The POAA contains 21% AO, as calculated by the ratio of molecular weights for oxygen (16) and POAA (76). $H_2O_2$ has 47% AO, calculated by the ratio of molecular weights for oxygen (16) and $H_2O_2$ (34). The above data shows that higher levels of POAA will reduce the intensity of the odor, but higher levels of $H_2O_2$ will actually increase the odor intensity (i.e.) a negative percent Reduction Intensity indicates an unfavorable rise in the intensity of the odor. This phenomenon is more clearly seen if the data are presented in the following manner.

The following table shows percent reductions in odor intensity (as n-butanol) as a function of peroxy acetic acid and hydrogen peroxide concentrations in scrubber water. Negative results indicate increased odor.

Hydrogen Peroxide concentration in Scrubber Water (ppm)

|  |  |  | 59 | 117 | 195 | 240 | 480 | 512 |
|---|---|---|---|---|---|---|---|---|
|  |  |  |  |  |  |  |  |  |
| Peroxy | 0 |  |  |  |  |  |  | -120% |
| acetic |  |  |  |  |  |  |  |  |
| acid in | 40 |  |  |  |  | -81% |  |  |
| scrubber |  |  |  |  |  |  |  |  |
| water | 80 |  | 47% | 58% |  |  | -33% |  |
| (ppm) |  |  |  |  |  |  |  |  |
|  | 267 |  |  | 9% |  |  |  |  |

The above figure shows that for given dosed concentrations of POAA, there is significant odor intensity reduction only if the corresponding dosed $H_2O_2$ concentration is not too high. $H_2O_2$ used at higher concentrations will give significant increases in odor intensity, which is not desirable. This behavior is unexpected, since both POAA and $H_2O_2$ are oxidizing agents. The effect is most noticeable when only $H_2O_2$ is used to treat the scrubber water. In this case, the intensity increased by 120%. An overwhelmingly strong amine/ammonia odor was also noticed in the scrubber water when $H_2O_2$ alone was used.

### Example 3

The water used in the venturi and packed tower system described in Example 1 was treated with a variety of ratios of peroxyacetic acid (POAA) and hydrogen peroxide ($H_2O_2$) as described in Example 2.

The effect of each type of treatment on Odor Detection Threshold reduction was studied by taking 10 liter samples in Tedlar bags of the exhaust gas just prior to the venturi (inlet) and immediately after the tower scrubber (outlet). These bags were then submitted to a trained odor panel on the same day as sampling and tested for Odor Detection Threshold (DT), which is defined as the number of dilutions of the sample required to make the odor emission barely detectable. The DT tests were run according to ASTM Standard Practice E679-91. Duplicate samples were taken for all tests.

Reductions in the DT dilution ratio indicate removal of odorous compounds from the air stream. The following table gives results of DT tests for various formulas of POAA and $H_2O_2$.

| POAA | AO | AA | $H_2O_2$ | % Red DT |
|---|---|---|---|---|
| 80 | 240 | 116 | 480 | 38 |
| 267 | 147 | 560 | 195 | 8 |
| 80 | 45 | 168 | 59 | 42 |
| 0 | 240 | 0 | 512 | 37 |
| 80 | 74 | 415 | 117 | 7 |
| 40 | 120 | 58 | 240 | 14 |

All concentrations are in dosed ppm active species. AA represents the concentration of acetic acid. AO (Active Oxygen) represents the total oxidizing potential of the product and is calculated by multiplying the active oxygen contributed by POAA (21% AO) by the level of POAA in the system, and then adding this to the active oxygen contributed by $H_2O_2$

(47% AO) times the level of $H_2O_2$ in the system. For example 80 ppm POAA time 0.21 plus 480 ppm $H_2O_2$ time 0.47 equals 240 ppm total active oxygen (AO) in the first row of the table. THE POAA contains 21% AO, as calculated by the ratio of molecular weights for oxygen (16) and POAA (76). $H_2O_2$ has 47% AO; calculated by the ratio of molecular weights for oxygen (16) and $H_2O_2$ (34).

The above data shows that significant reductions in odor thresholds occur at high levels of either POAA or $H_2O_2$. Focusing on formulas with POAA (since odor intensity increases with $H_2O_2$ only formulas), the data can be shown as follows:

Acetic acid concentration is scrubber water (ppm)

|  |  | 58 | 116 | 168 | 415 | 560 |
|---|---|---|---|---|---|---|
| Peroxy acid | 40 | 14 |  |  |  |  |
| Conc. in | 80 |  | 38 | 42 | 7 |  |
| Scrubber | 267 |  |  |  |  | 8 |
| Water (ppm) |  |  |  |  |  |  |

This data shows that for POAA formulas, the level of POAA and AA (acetic acid) are important. The best reductions in odor threshold are achieved when dosed POAA concentrations are above 40 ppm while maintaining dosed acetic acid levels below about 300 ppm.

### Example 4

One liter gas samples were taken from the blood dryer scrubber system described in Examples 2 and 3 submitted for Gas Chromatography (GC) analysis in order to determine what types of odor molecules were present, and to what extent the odor molecules were removed by various treatments of POAA and $H_2O_2$. Samples were again taken simultaneously just prior to the venturi (inlet) and after the tower (outlet).

Twenty sulfur compounds were analyzed, including: hydrogen sulfide, carbonyl sulfide (C=S), methyl mercaptan, ethyl mercaptan, dimethyl sulfide, carbon disulfide, isopropyl mercaptan, butyl mercaptan, n-propyl mercaptan, ethyl methyl sulfide, thiophene, isobutyl mercaptan, diethyl sulfide, n-butyl mercaptan, dimethyl disulfide, 3-methylthioprene, tetrahydrothioprene, 2,5-dimethylthioprene, 2-ethylthioprene, diethyl disulfide.

Most of the compounds were below the detection limit of the instruments, except for hydrogen sulfide and methyl mercaptan in some of the tests. Results for percent reduction of hydrogen sulfide ($H_2S$) from inlet to outlet for various ratios of POAA and $H_2O_2$ are shown in the following table:

**Percent Reduction of Hydrogen Sulfide For Various Ratios of POAA and $H_2O_2$**

| POAA Dosed (ppm) | $H_2O_2$ Dosed (ppm) | Percent Reduction $H_2S$ |
|---|---|---|
| 0 * | 512 | 52 |
| 80 | 59 | 61 |
| 80 | 117 | 63 |
| 267 | 195 | 69 |
| * Comparison | | |

These results show that, although all treatments reduced $H_2S$ levels, the greatest reduction came from high levels of POAA.

Results for percent reduction of methyl mercaptan from inlet to outlet are shown below:

**Percent Reduction of Methyl Mercaptan For Various Ratios of POAA and $H_2O_2$**

| POAA Dosed (ppm) | $H_2O_2$ Dosed (ppm) | Percent Reduction Methyl Mercaptan ($CH_3SH$) |
|---|---|---|
| 0 * | 512 | 0 |
| 40 | 240 | 46 |
| 80 | 480 | 28 |

(continued)

| POAA Dosed (ppm) | H$_2$O$_2$ Dosed (ppm) | Percent Reduction Methyl Mercaptan (CH$_3$SH) |
|---|---|---|
| 80 | 117 | 36 |
| 267 | 195 | 23 |
| * Comparison | | |

The results show that formulas with POAA will reduce methyl mercaptan concentrations in the gas stream. However, H$_2$O$_2$ alone provides no reduction for this molecule. In the above two tables, not all tested ratios of H$_2$O$_2$ and POAA are shown, since for some the tests, the results were below the detection limit of the instruments.

## Example 5

For the system described in Example 2, samples of the venturi and packed tower scrubber water were also taken, and the odor strength emanating from each water sample was scored on a scale from one to five. Five being the most offensive, and one being the least offensive odor. The results for each of the formulas tested are shown below. In these tests, the venturi and the packed tower samples gave equal odor strength scores for all treatments.

| Odor Strength of Scrubber Water for Various Treatments All concentrations are active dosed species (ppm) | | | | | |
|---|---|---|---|---|---|
| Formula | POAA | AO | AA | H$_2$O$_2$ | Water Odor Score |
| 1* | 80 | 240 | 116 | 480 | 3 |
| 2 | 267 | 147 | 560 | 195 | 1 |
| 2 | 80 | 45 | 168 | 59 | 2 |
| 3 * | 0 | 240 | 0 | 512 | 5 |
| 4 | 80 | 74 | 415 | 117 | 3 |
| 1 * | 40 | 120 | 58 | 240 | 4 |
| *Comparison | | | | | |

Low odor strength scores for the scrubber water are achieved with higher levels of POAA. Conversely, higher H$_2$O$_2$ levels gave stronger odors in the scrubber water.

## Example 6

The application method of using micron-sized (25 to 500 $\mu$m) peroxy acid fogs was compared to liquid peroxy acid treatments. In this example, hydrogen sulfide levels were monitored during the hydrolyzing of chicken feathers. This process generates a continuous low-level background of hydrogen sulfide followed by high level bursts when the feathers are transferred from the oven to the dryer. The reduction of this high-level odor in intensity and the rate at which it occurs is critical to emission regulations. In the table, experiment 1 is the method previously described while experiments 2 and 3 pertain to the current method. Level 1 refers to a peroxyacetic acid dosed level of 500 ppm while level 2 refers to a peroxyacetic acid dosed level of 2,500 ppm.

| | Treatment Method | H$_2$S Level five minutes after malodor release[a] | Time to return to pre-release level of H$_2$S |
|---|---|---|---|
| 1 | conventional spray 1,000 to 10,000 $\mu$m) | 48 ppm | 15 minutes |
| 2 | sub-millimeter atomized fog spray, level 1 peroxy acid (25 to 500 $\mu$m) | 14 ppm | 5 minutes |

(continued)

| | Treatment Method | H₂S Level five minutes after malodor release[a] | Time to return to pre-release level of H₂S |
|---|---|---|---|
| 3 | sub-millimeter atomized fog spray, level 2 peroxy acid (25 to 500 µm) | 7 ppm | 4 minutes |
| a) From an industrial Feather Scrubber releasing bursts of malodorous hydrogen sulfide. | | | |

The test results show a significant improvement both in residual malodor after five minutes and in the speed in which the malodors are removed.

**Example 7**

The table demonstrates the composite odor reduction from the new peroxy acid application method, as measured by olfactory evaluation from grab samples. Odor samples were taken via air pump and collected in Tedlar sampling bags. The samples were evaluated by an olfactory panel, and all scores were averaged. The results are tabulated on a scale of 1 to 10, wherein 10 indicates most malodorous.

| | Treatment Method | Odor Ranking |
|---|---|---|
| 1 | conventional spray (1,000 to 10,000 µm) | 6.2 |
| 2 | atomized fog spray, level 1 peroxy acid (25 to 500 µm) | 5.0 |
| 3 | atomized fog spray, level 2 peroxy acid (25 to 500 µm) | 4.6 |
| a) An odor panel of 6 members; samples were taken five minutes after the malodor was introduced into the air stream. | | |

The data demonstrates the added advantage of the current peroxy acid fogging method over the previous treatment method. A comparison of experiment 1 with experiment 3 shows a reduction of 1.6 units; whereas a reduction of 0.5 units is deemed significant.

**Example 8**

The table compares a conventional spray treatment to the fogging method. The conventional spray treatment uses a venturi/packed tower system with dosed internal sprays of 5,000 to 40,000 µm droplet sized peroxyacetic acid at 30 to 100 ppm peroxy acid while the invention method uses 40 to 100 µm sized droplets of 1000 to 15,000 ppm dosed peroxy acid. The total spray flow in the conventional system was about 40 gallons per minute (150 liters per minute) while the improved fogging method had a spray rate of only about 1.6 gallons per minute (6 liters per minute).

**Odor Evaluation[1]**

| | Treatment Condition | Peroxy acid Concentration (ppm) | Total Peroxy acid Use (gallons per day) | Odor Rating (1-10, 10=best) "Non-Condensable Odor Intensity"[2] |
|---|---|---|---|---|
| | | | | |
| 1 | Peroxyacetic Acid Conventional Spray[3] | 30 | 12 | 3 |
| 2 | Peroxyacetic Acid Conventional Spray[3] | 100 | 40 | 5 |
| | | | | |
| | | | | |

(continued)

|  | Treatment Condition | Peroxy acid Concentration (ppm) | Total Peroxy acid Use (gallons per day) | Odor Rating (1-10, 10=best) "Non-Condensable Odor Intensity"[2] |
|---|---|---|---|---|
| 3 | Peroxyacetic Acid Atomized Fog[4] | 1,000 | 1.3 | 5 |
| 4 | Peroxyacetic Acid Atomized Fog[4] | 15,000 | 22 | 8 |

1) Odor rating from an industrial rendering plant olfactory analysis of relative intensities and detection thresholds.
2) Odor intensity as measured by the rendering facility as "sharpness" of the malodors from the treated stack. Usually defined in the industry as the site perimeter level of "non-condensables, cooker smell and sulfides."
3) Peroxyacetic conventional spray using low surface area, large droplet sized sprays in a packed tower.
4) Fogging atomizer using high surface area, small droplet, low solution-flow fogs in open ductwork.

As seen in Example 6 and Example 7, this example demonstrates the improved art of using a high-concentration, low-flow, high-surface area peroxy acid fog for control of non-condensable odors. These non-condensables are easily recognizable in the rendering industry and are characterized by a bitter/burnt/decay odor profile. The data demonstrates the improvement on odor control with less peroxy acid consumption using the current method over the prior art. In all these examples the resulting data shows more than an additive or linear result from the improved inventive technology.

## Example 9

As seen in figure 3, upon spiking an essential oil (pine oil) into a conventional treatment system such as chlorine or chlorine dioxide, the loss of oxidant is rapid; with essentially complete elimination within about five to ten minutes. This rapid oxidant loss would negate the simultaneous use of essential oils. In contrast, the peroxyacid rate of decay is much lower with a small residual remaining even after one hour.

This improvement in the art is unexpected since the apparent ability of the peroxyacids to eliminate malodors should couple its ability to also oxidize the essential oils and thereby render both inactive. In other words, mutual destruction. This is the effect found in the other systems. The comparative data is also seen below:

| Time (minutes) | POAA (Relative Rate) | Chlorine dioxide (Relative Rate) | Chlorine (Relative Rate) |
|---|---|---|---|
| 0 | 90 | 130 | 150 |
| 0.5 | 77 | 90 | 110 |
| 1 | 73 | 30 | 70 |
| 2 | 70 | 5 | 30 |
| 5 | 68 | 0 | 5 |
| 10 | 63 | 0 | 0 |
| 20 | 55 | 0 | 0 |
| 45 | 38 | 0 | 0 |
| 60 | 8 | 0 | 0 |

## Example 10

The objective of this example was to compare the use of peroxyacids alone with the improved and synergistic method of co-injecting peroxyacids and essential oils for odor elimination. The table compares the results of using synergistic blends of peroxyacid and essential oils (experiments 5-7) versus control treatments of using either alone (experiments 1-4).

| | Peroxyacid Treatment Condition | Peroxyacid Concentration (ppm) | | Pine Oil[1] Concentration (ppm) | | Tower[2] Odor Rating (1-10, 10=best) | |
|---|---|---|---|---|---|---|---|
| | | Cooker | Raw | Cooker | Raw | Cooker | Raw |
| | Control Studies | | | | | | |
| 1 | peroxyacetic acid | 60 | 90 | 0 | 0 | 5.0 | 6.0 |
| 2 | peroxyacetic acid | 120 | 90 | 0 | 0 | 5.0 | 5.0 |
| 3 | pine oil[1] | 0 | 0 | 62 | 62 | 2.5 | 3.0 |
| 4 | pine oil[1] | 0 | 0 | 125 | 125 | 3.0 | 3.0 |
| | | | | | | | |
| | Examples | | | | | | |
| | | | | | | | |
| 5 | peroxyacetic acid + pine oil[1] | 120 | 90 | 125 | 125 | 7.9 (45 min.)[3] | 8.9 (45 min.)[3] |
| 6 | peroxyacetic acid + pine oil[1] | 60 | 90 | 62 | 62 | 8.0 (50 min.)[3] | 8.5 (45 min.)[3] |
| 7 | peroxyacetic acid + pine oil[1] | 50 | 105 | 4 | 4 | 8.0 (7 min.)[3] | 8.0 (45 min.)[3] |
| 1) Pine oil from a mix of pine terpenes and mineral spirits. 2) Odor Rating from olefactory analysis subjective scale of relative intensity. 3) Time duration of treated synergistic effect. | | | | | | | |

The above data shows that synergistic blends of peroxy acetic acid and essential oils are noticeably more effective than either tested alone. Experiment 7 shows that even a minor amount of essential oil has a beneficial effect. The use of peroxyacid alone does little to eliminate malodors while the use of pine oil alone is a poor masking agent. Thus, it was found that when using peroxy acetic acid alone a musty-bitter smell remains after treatment of a carcass cooker scrubber, and a sewery-pine smell is achieved if pine oil is used alone. However, if both odor treatment components are co-added, an extremely low intensity pine smell is found with no musty/sewery/bitter components to it; i.e., the addition of both the essential oil and peroxyacid creates an almost "no smell" situation with a hint of the essential oil.

## Example 11

This example demonstrates the use of mixed essential oils for enhanced odor controls using peroxyacids in an industrial rendering plant cooker scrubber.

**Odor Evaluation[1]**

| | | | | Odor Rating (1-10, 10 = best) | |
|---|---|---|---|---|---|
| | Treatment Condition | Peroxyacid Concentration (ppm) | Essential Oil Concentration (ppm) | Relative Malodor Intensity[2] | Relative Odor Detection[3] |
| | | | | | |
| | Control Studies | | | | |

(continued)

| | Treatment Condition | Peroxyacid Concentration (ppm) | Essential Oil Concentration (ppm) | Odor Rating (1-10, 10 = best) | |
| --- | --- | --- | --- | --- | --- |
| | | | | Relative Malodor Intensity[2] | Relative Odor Detection[3] |
| 1 | Peroxyacetic Acid | 30 | 0 | 3 | 2 |
| 2 | Peroxyacetic Acid | 100 | 0 | 5 | 5 |
| 3 | α-Pinene/ Benzaldehyde[4] | 0 | 20 | 1 | 1 |
| 4 | α-Pinene/ Benzaldehyde[4] | 0 | 50 | 3 | 2 |
| 5 | α-Pinene/ transcinnamaldehyde[5] | 0 | 50 | 4 | 3 |
| | | | | | |
| | **Examples** | | | | |
| 6 | Peroxyacetic Acid + α-Pinene/ Benzaldehyde | 30 | 20 | 6 | 7 |
| 7 | Peroxyacetic Acid + α-Pinene/ Benzaldehyde | 50 | 20 | 8 | 8 |
| 8 | Peroxyacetic Acid + α-Pinene/ Benzaldehyde[4] | 100 | 50 | 9 | 8 |
| 9 | Peroxyacetic Acid + α-Pinene/ transcinnamaldehyde[5] | 100 | 50 | 9 | 9 |

1) Odor rating from an industrial rendering plant olfactory analysis of relative intensities and detection thresholds.
2) Odor intensity as measured by the rendering facility as "sharpness" of the malodors fronm the treated stack. Usually defined in the industry as the site perimeter level of "non-condensables, cooker smell and sulfides."
3) Odor detection as measured by the rendering facility as the "level" of total odor; i.e., treatment chemicals plus malodors.
4) A 70/30 wt/wt ratio of α-pinene/benzaldehyde essential oil mixture.
5) A 70/30 wt/wt ratio of α-pinene/trans-cinnamaldehyde essential oil mixture

The above specification, example and data provide a clear basis for understanding the operation of the compositions and methods of the invention. While the invention can be embodied in a variety of specific examples and processes, the invention resides in the claims hereinafter appended.

**Claims**

1. A process for removing an odor from an atmosphere effluent, the process comprising:

    (a) contacting an atmosphere effluent comprising an odor component with an aqueous peroxyacid treatment composition containing water, peracetic acid, hydrogen peroxide and acetic acid, forming an oxidized odor component and dissolving the oxidized odor component in the aqueous treatment composition to form a used treatment; and
    (b) removing at least a portion of the used treatment;

    wherein the aqueous peroxyacid treatment composition is an aqueous peroxyacid fog treatment composition comprising less than 5 parts by weight of hydrogen peroxide per each part of peroxyacid.

**2.** The process of claim 1 wherein in a wet scrubber tower, the plant atmosphere effluent is a gaseous stream passing vertically against a counter cocurrent flow of finely divided particulates or thin streams of the aqueous peroxyacid treatment composition.

**3.** The process of claim 1 wherein the aqueous peracid treatment composition comprises a residual acetic acid concentration of less than 600 parts by weight per one million parts of the treatment.

**4.** The process of claim 2 wherein the aqueous treatment composition comprises 1 to 90 weight percent (wt%) of acetic acid, 1 to 50 wt% of hydrogen peroxide, a sequestrant, and 1 to 40 wt% of peroxyacetic acid.

**5.** The process of claim 2 wherein one cubic foot (28 liters) of plant atmosphere effluent is contacted with 0.01 to 10 liters of aqueous treatment solution.

**6.** The process of claim 1 wherein, in the vertical scrubber column, the plant atmosphere effluent is a gaseous stream passing vertically with a cocurrent flow of finely divided particulates or thin streams of the aqueous peroxyacid treatment composition.

**7.** The process of claims 1 to 6 wherein the peroxyacid composition is a finely divided aqueous peroxy acid treatment composition with an average droplet size of 25 to 500 $\mu$m.

**8.** The process of claims 1 to 7 which is a pre-treatment or post-treatment process for removing an odor from an atmosphere effluent.

**9.** The process of claim 7 or 8 wherein the aqueous peroxy acid fog treatment composition comprises a dosed peroxy acid concentration of less than 30,000 parts by weight per one million parts of the treatment.

**10.** The process of claim 7 or 8 wherein the aqueous peroxy acid fog treatment composition comprises 1 to 90 wt% of acetic acid, 1 to 50 wt% of hydrogen peroxide, a sequestrant, and 1 to 40 wt% of peroxyacetic acid.

**11.** The process of claim 7 or 8 wherein one cubic foot (28 liters) of plant atmosphere effluent is contacted with 0.01 to 0.18 liters of aqueous treatment solution.

**12.** A process for removing an odor from an atmosphere effluent, according to in claim 1; and subsequently:

(a) contacting the atmosphere effluent comprising an odor component with a further finely divided aqueous peroxy acid treatment composition, forming an oxidized odor component and dissolving the oxidized odor component in the aqueous treatment composition to form a used treatment; and
(b) removing at least a portion of the used treatment.

**13.** A process according to claim 1, said process being pre-treatment or post-treatment for removing an odor from an atmosphere effluent, the process comprising contacting an atmosphere effluent comprising an odor component with from 0.1 to 3 gallons per minute of a finely divided aqueous peroxy acid treatment composition comprising at least 100 ppm or peroxyacetic acid, at least 100 ppm of hydrogen peroxide and at least 20 ppm of acetic acid, forming an oxidized odor component and dissolving the oxidized odor component in the aqueous treatment composition; wherein the finely divided aqueous peroxy acid treatment composition has an average droplet size of 25 to 500 $\mu$m.

**14.** The process of claim 1, wherein the atmosphere effluent comprising an odor component is contacted with the aqueous peroxyacid treatment composition and one or more essential oils, forming an oxidized odor component and dissolving the oxidized odor component in the aqueous treatment composition to form a used treatment; and removing at least a portion of the used treatment.

**15.** The process of claim 14 wherein the essential oil is a terpene.

**16.** The process of claim 15 wherein the terpene is selected from the group consisting of citral, camphor, $\alpha$ and $\beta$-pinene, terpineol, limonene, $\alpha$ and $\beta$-terpinene, $\alpha$ and $\beta$-phellandrene, cedrene, geraniol, linalool, neral and abietic acid.

**17.** The process of claim 15 wherein the terpene is selected from the group consisting of mono-, di-, tri- and tetra unsaturated olefin terpenes.

18. The process of claim 15 wherein the terpene is selected from the group consisting of citral, camphor, α and β-pinene, terpineol and limonene.

19. The process of claim 14 wherein the essential oil is an aldehyde.

20. The process of claim 19 wherein the aldehyde is selected from the group consisting of benzaldehyde and cinnamaldehyde.


**Patentansprüche**

1. Verfahren zur Entfernung von Geruch aus einem Luftabstrom, umfassend

   a) Inkontaktbringen eines eine Geruchskomponente umfassenden Luftabstroms mit einer Peroxidsäure-Behandlungszusammensetzung, enthaltend Wasser, Peressigsäure, Wasserstoffperoxid und Essigsäure, welche eine oxidierte Geruchskomponente bildet und die oxidierte Geruchskomponente in der wässrigen Behandlungszusammensetzung auflöst, unter Ausbildung einer verbrauchten Behandlungseinheit und
   b) Entfernen wenigstens eines Teils der verbrauchten Behandlung,

   wobei die wässrige Peroxidsäure-Behandlungszusammensetzung eine wässrige Peroxidsäurenebel-Behandlungszusammensetzung ist, welche weniger als 5 Gewichtsteile Wasserstoffperoxid pro jedem Teil Peroxidsäure umfasst.

2. Verfahren nach Anspruch 1, worin in einem Befeuchtungsrieselturm der Anlagenluftabstrom ein gasförmiger Strom ist, welcher senkrecht gegen eine Gegenströmung fein verteilter Teilchen oder dünner Ströme der wässrigen Peroxidsäure-Behandlungszusammensetzung läuft.

3. Verfahren nach Anspruch 1, worin die wässrige Persäure-Behandlungszusammensetzung eine Rest-Essigsäurekonzentration von weniger als 600 Gewichtsteilen pro eine Million Teilen der Behandlungseinheit umfasst.

4. Verfahren nach Anspruch 2, worin die wässrige Behandlungszusammensetzung 1 bis 90 Gewichtsprozent (Gew. %) Essigsäure, 1 bis 50 Gew.% Wasserstoffperoxid, ein Sequestrierungsmittel und 1 bis 40 Gew.% Peroxidessigsäure umfasst.

5. Verfahren nach Anspruch 2, worin ein Kubikfuß (28 Liter) Anlagenluftabstrom mit etwa 0,01 bis 10 Litern der wässrigen Behandlungslösung in Kontakt gebracht wird.

6. Verfahren nach Anspruch 1, worin in der senkrechten Absorbtionskolonne der Anlagenluftabstrom ein gasförmiger Strom ist, welcher senkrecht mit einem Gleichstrom von fein verteilten Teilchen oder dünnen Strömen der wässrigen Peroxidsäure-Behandlungszusammensetzung fließt.

7. Verfahren nach den Ansprüchen 1 bis 6, worin die Peroxidsäurezusammensetzung eine fein verteilte wässrige Peroxidsäure-Behandlungszusammensetzung mit einer mittleren Tröpfchengröße von 25 bis 500 μm ist.

8. Verfahren nach den Ansprüchen 1 bis 7, das ein Vorbehandlungs- oder Nachbehandlungsverfahren zur Entfernung eines Geruchs aus einem Luftabstrom ist.

9. Verfahren nach Anspruch 7 oder 8, worin die wässrige Peroxidsäurenebel-Behandlungszusammensetzung eine dosierte Peroxidsäurekonzentration von weniger als 30.000 Gewichtsteilen pro einer Million Teilen der Behandlungseinheit umfasst.

10. Verfahren nach Anspruch 7 oder 8, worin die wässrige Peroxidsäurenebel-Behandlungszusammensetzung 1 bis 90 Gew.% Essigsäure, 1 bis 50 Gew.% Wasserstoffperoxid, ein Sequestrierungsmittel und 1 bis 40 Gew.% Feroxidessigsäure umfasst.

11. Verfahren nach Anspruch 7 oder 8, worin ein Kubikfuß (28 Liter) Anlagenluftabstrom mit 0,01 bis 0,18 Litern wässriger Behandlungslösung in Kontakt gebracht wird.

12. Verfahren zur Entfernung eines Geruchsstoffes aus einem Luftabstrom gemäß Anspruch 1, das des Weiteren umfasst:

a) Inkontaktbringen des eine Geruchskomponente umfassenden Luftabstroms mit einer weiter fein verteilten wässrigen Peroxidsäure-Behandlungszusammensetzung, welche eine oxidierte Geruchskomponente bildet und die oxidierte Geruchskomponente in der wässrigen Behandlungszusammensetzung unter Ausbildung einer verbrauchten Behandlungseinheit auflöst; und
b) Entfernen wenigstens eines Teils der verbrauchten Behandlungseinheit.

13. Verfahren nach Anspruch 1, wobei das Verfahren eine Vor- oder Nachbehandlung zur Entfernung eines Geruchs aus einem Luftabstrom darstellt, wobei das Verfahren das Inkontaktbringen eines eine Geruchskomponente umfassenden Luftabstromes mit 0,1 bis 3 Gallonen (0,4 bis 11 Liter) einer fein verteilten wässrigen Peroxidsäure-Behandlungszusammensetzung umfasst, welche wenigstens 100 ppm Peroxidessigsäure, wenigstens 100 ppm Wasserstoffperoxid und wenigstens 20 ppm Essigsäure umfasst, wobei eine oxidierte Geruchskomponente gebildet wird und die oxidierte Geruchskomponente in der wässrigen Behandlungszusammensetzung gelöst wird; und worin die fein verteilte Peroxidsäure-Behandlungszusammensetzung eine mittlere Tröpfchengröße von 25 bis 500 $\mu$m aufweist.

14. Verfahren nach Anspruch 1, worin der eine Geruchskomponente umfassende Luftabstrom mit einer wässrigen Peroxidsäure-Behandlungszusammensetzung und einem oder mehreren etherischen Ölen in Kontakt gebracht wird, wobei eine oxidierte Geruchskomponente gebildet wird und die oxidierte Geruchskomponente in der wässrigen Behandlungszusammensetzung unter Ausbildung einer verbrauchten Behandlungseinheit aufgelöst wird; und Entfernen wenigstens eines Teils der verbrauchten Behandlungseinheit.

15. Verfahren nach Anspruch 14, worin das etherische Öl ein Terpen ist.

16. Verfahren nach Anspruch 15, worin das Terpen aus der Gruppe, bestehend aus Citral, Kampfer, $\alpha$- und $\beta$-Pinen, Terpineol, Limonen, $\alpha$- und $\beta$-Terpinen, $\alpha$- und $\beta$-Phellandren, Cedren, Geraniol, Linalool, Neral und Abietinsäure, ausgewählt ist.

17. Verfahren nach Anspruch 15, worin das Terpen aus der Gruppe, bestehend aus mono-, di-, tri- und tetra-ungesättigten Olefinterpenen, ausgewählt ist.

18. Verfahren nach Anspruch 15, worin das Terpen aus der Gruppe, bestehend aus Citral, Kampfer, $\alpha$- und $\beta$-Pinen, Terpineol und Limonen, ausgewählt ist.

19. Verfahren nach Anspruch 14, worin das etherische Öl ein Aldehyd ist.

20. Verfahren nach Anspruch 19, worin der Aldehyd aus der Gruppe ausgewählt ist, bestehend aus Benzaldehyd und Zimtsäurealdehyd.

**Revendications**

1. Procédé de retrait d'une odeur d'un effluent atmosphérique, le procédé comprenant :

(a) la mise en contact d'un effluent atmosphérique comprenant un composant odorant avec une composition de traitement aqueuse peroxyacide contenant de l'eau, de l'acide peracétique, du peroxyde d'hydrogène et de l'acide acétique, la formation d'un composant odorant oxydé et la dissolution du composant odorant oxydé dans la composition de traitement aqueuse pour former un traitement usé ; et
(b) le retrait d'au moins une partie du traitement usé ;

dans lequel la composition de traitement peracidique aqueuse est une composition de traitement en brouillard aqueux peroxyacide comprenant moins de 5 parties en poids de peroxyde d'hydrogène pour chaque partie de peroxyacide.

2. Procédé selon la revendication 1 dans lequel, dans une tour d'épuration par voie humide, l'effluent atmosphérique d'usine est un courant gazeux passant verticalement contre un écoulement à contre-courant de particules finement divisées ou de courants fins de la composition de traitement aqueuse peroxyacide.

**3.** Procédé selon la revendication 1 dans lequel la composition de traitement peracidique aqueuse comprend une concentration résiduelle d'acide acétique inférieure à 600 parties en poids pour un million de parties du traitement.

**4.** Procédé selon la revendication 2 dans lequel la composition de traitement aqueuse comprend 1 à 90 pour cent en poids (% en poids) d'acide acétique, 1 à 50 % en poids de peroxyde d'hydrogène, un séquestrant, et 1 à 40 % en poids d'acide peracétique.

**5.** Procédé selon la revendication 2 dans lequel un pied cube (28 litres) d'effluent atmosphérique d'usine est mis en contact avec 0,01 à 10 litres de solution aqueuse de traitement.

**6.** Procédé selon la revendication 1 dans lequel, dans la colonne d'épuration verticale, l'effluent atmosphérique d'usine est un courant gazeux passant verticalement avec un écoulement à co-courant de particules finement divisées ou de courants fins de la composition de traitement aqueuse peroxyacide.

**7.** Procédé selon les revendications 1 à 6 dans lequel la composition peracidique est une composition de traitement peracidique aqueuse finement divisée avec une taille moyenne de gouttelettes de 25 à 500 $\mu$m.

**8.** Procédé selon les revendications 1 à 7 qui est un procédé de pré-traitement ou post-traitement visant à retirer une odeur d'un effluent atmosphérique.

**9.** Procédé selon la revendication 7 ou 8 dans lequel la composition de traitement en brouillard aqueux peroxyacide comprend une concentration en peroxyacide dosée inférieure à 30 000 parties en poids pour un million de parties du traitement.

**10.** Procédé selon la revendication 7 ou 8 dans lequel la composition de traitement en brouillard aqueux peroxyacide comprend 1 à 90 % en poids d'acide acétique, 1 à 50 % en poids de peroxyde d'hydrogène, un séquestrant, et 1 à 40 % en poids d'acide peracétique.

**11.** Procédé selon la revendication 7 ou 8 dans lequel un pied cube (28 litres) d'effluent atmosphérique d'usine est mis en contact avec 0,01 à 0,18 litre de solution aqueuse de traitement.

**12.** Procédé de retrait d'une odeur d'un effluent atmosphérique selon la revendication 1, et comprenant ensuite :

(a) la mise en contact de l'effluent atmosphérique comprenant un composant odorant avec une autre composition de traitement aqueuse peroxyacide finement divisée, la formation d'un composant odorant oxydé et la dissolution du composant odorant oxydé dans la composition de traitement aqueuse pour former un traitement usé ; et
(b) le retrait d'au moins une partie du traitement usé.

**13.** Procédé selon la revendication 1, ledit procédé étant un pré-traitement ou un post-traitement visant à retirer une odeur d'un effluent atmosphérique, le procédé comprenant la mise en contact d'un effluent atmosphérique comprenant un composant odorant avec 0,1 à 3 gallons (0,4 à 11 litres) par minute d'une composition de traitement aqueuse peroxyacide finement divisée comprenant au moins 100 ppm d'acide peracétique, au moins 100 ppm de peroxyde d'hydrogène et au moins 20 ppm d'acide acétique, la formation d'un composant odorant oxydé et la dissolution du composant odorant oxydé dans la composition de traitement aqueuse ; dans lequel la composition de traitement aqueuse finement divisée peroxyacide possède une taille moyenne de gouttelettes de 25 à 500 $\mu$m.

**14.** Procédé selon la revendication 1, dans lequel l'effluent atmosphérique comprenant un composant odorant est mis en contact avec la composition de traitement aqueuse peroxyacide et une ou plusieurs huiles essentielles, on forme un composant odorant oxydé et on dissout le composant odorant oxydé dans la composition de traitement aqueuse pour former un traitement usé ; et au moins une partie du traitement usé est retirée.

**15.** Procédé selon la revendication 14 dans lequel l'huile essentielle est un terpène.

**16.** Procédé selon la revendication 15 dans lequel le terpène est choisi dans le groupe constitué par le citral, le camphre, les $\alpha$- et $\beta$-pinènes, le terpinéol, le limonène, les $\alpha$- et $\beta$-terpinènes, les $\alpha$- et $\beta$-phellandrènes, le cédrène, le géraniol, le linalool, le néral et l'acide abiétique.

**17.** Procédé selon la revendication 15 dans lequel le terpène est choisi dans le groupe constitué par les terpènes d'oléfines mono-, di-, tri- et tétra-insaturées.

18. Procédé selon la revendication 15 dans lequel le terpène est choisi dans le groupe constitué par le citral, le camphre, les $\alpha$- et $\beta$-pinènes, le terpinéol et le limonène.

19. Procédé selon la revendication 14 dans lequel l'huile essentielle est un aldéhyde.

20. Procédé selon la revendication 19 dans lequel l'aldéhyde est choisi dans le groupe constitué par le benzaldéhyde et le cinnamaldéhyde.

FIG.1A

## FIG. 1B

## FIG. 2B

# FIG. 2A

# Figure 3

# Oxidant Reduction Rate

## after essential oil spike

EP 0 930 090 B1